# EUROPÄISCHE PATENTANMELDUNG

(11) **EP 2 650 428 A2**
(43) Veröffentlichungstag der Anmeldung: **16.10.2013**
(21) Anmeldenummer: 12168984.8
(22) Anmeldetag: 22.05.2012
(51) Int. Cl.: D06F 89/00, D06H 5/00, D06M 17/00, A47L 13/16

(54) **Reinigungsbezug**

(30) Priorität: 15.04.2012 EP 12164203
(71) Anmelder: Bleuel, Norbert, 69509 Mörlenbach (DE)
(72) Erfinder: Bleuel, Norbert, 69509 Mörlenbach (DE)
(74) Vertreter: Bradl, Joachim

(57) **Zusammenfassung**

Reinigungsbezug (1) für eine insbesondere in Form eines Wischmopps ausgebildete Reinigungsvorrichtung, mit welcher eine Oberfläche reinigbar ist. Der Reinigungsbezug (1) weist mehrere nebeneinander und sich teilweise überlappend angeordnete Streifen (2) eines Stoffes jeweils einer bestimmten Breite auf. Ein Streifen (2) ist flächenförmig ausgebildet. Bei der Reinigung sind die Streifen (2) der zu reinigenden Oberfläche zugewandt und mit dieser Oberfläche in Kontakt bringbar. Die Streifen (2) sind schleifenförmig ausgebildet und bilden jeweils eine Schleife (3). Hierdurch ist pro Streifen (2) zumindest teilweise eine zweilagige Anordnung ausgebildet.

## Beschreibung

Die vorliegende Erfindung betrifft einen Reinigungsbezug für eine insbesondere in Form eines Wischmopps ausgebildete Reinigungsvorrichtung mit welcher eine Oberfläche reinigbar ist. Der Reinigungsbezug weist mehrere nebeneinander und sich teilweise überlappend angeordnete Streifen eines Stoffes jeweils einer oder verschiedener vorgebbarer Breite auf. Ein Streifen ist flächenförmig ausgebildet. Bei der Reinigung sind die Streifen der zu reinigenden Oberfläche zugewandt und mit der Oberfläche in Kontakt bringbar.

Reinigungsbezüge für Wischmopps sind aus dem Stand der Technik hinlänglich bekannt. Lediglich beispielhaft wird auf die EP 0 779 055 A2 hingewiesen, aus welcher ein Moppbezug bekannt ist. Grundsätzlich weist ein solcher Reinigungsbezug für einen Wischmopp lediglich eine begrenzte Kapazität zur Aufnahme von Schmutz, Staub und Haaren auf. Ist die Kapazitätsgrenze erreicht, so muss der Reinigungsbezug ausgewaschen werden. Dies erfolgt üblicherweise dadurch, dass der Reinigungsbezug unmittelbar in einem Eimer mit Reinigungsflüssigkeit entweder von Hand oder mit einer entsprechenden Press- oder Auswringmechanik ausgewaschen wird. Ein wiederholtes vollständiges Auswaschen des Reinigungsbezugs ist in den seltensten Fällen möglich, da der ausgewaschene Schmutz in der Reinigungsflüssigkeit verbleibt. Insoweit ist der Reinigungsbezug nach dem Auswaschen zwar angefeuchtet, jedoch auch mit der mittlerweile verschmutzten Reinigungsflüssigkeit kontaminiert. Insoweit gelingt mit einem Wischmopp im Zusammenspiel mit einem herkömmlichen Reinigungsbezug allenfalls eine erste Grobreinigung. Eine Reinigung mit einer vorgebbaren hohen Güte ist in der Regel hiermit nicht möglich, da schon nach kurzer Zeit die kontaminierte Reinigungsflüssigkeit mehr oder weniger gleichmäßig auf die zu reinigende Oberfläche verteilt wird.

Aus der DE 10 2006 027 284 A1 ist eine Vorrichtung und ein Verfahren zur Reinigung von Böden bekannt, bei welcher ein Reinigungstextil zur Anwendung kommen kann, welches einen Vliesstoff aus Polyester- Polyethylenterephtalat (PET) - und Polyamid aufweist. Ein solcher Vliesstoff ist beispielsweise unter der Bezeichnung Evolon (®) von der Firma Freudenberg Evolon KG, 69465 Weinheim, Deutschland beziehbar. Dieser Stoff ist einerseits stabil und strapazierfähig und andererseits weich und aufnahmefähig für Schmutz. Dieser Stoff ist im trockenen Zustand hervorragend für eine Feinstaubaufnahme geeignet und bindet auch durch seine Materialeigenschaften Fussel und Haare. Zudem kann dieser Stoff durch Abwischen mit der Hand leicht wieder von grobem Schmutz nach der Anwendung befreit werden. Das lästige Auszupfen von Haaren und anderen Grobteilen entfällt, weil der Stoff keine dauerhafte Bindung mit dem Schmutz eingeht.

Da dieser Stoff eine hohe Friktion mit einer zu reinigenden Oberfläche aufweisen kann, ist es erforderlich, ein Reinigungstextil bestehend aus diesem Stoff an einem Wischkörper des Wischmopps in einer besonderen Art und Weise zu befestigen. Eine Möglichkeit der Befestigung eines solchen Reinigungstextils an einem Wischkörper eines Wischmopps ist in der DE 10 2006 027 284 A1 beschrieben. Dementsprechend kann mit der aus der DE 10 2006 027 284 A1 beschriebenen Vorrichtung eine äußerst gründliche Reinigung von Böden erfolgen. Eine unmittelbare Ausbildung eines herkömmlichen Reinigungsbezugs aus diesem speziellen Stoff und somit eine unmittelbare Anwendung zusammen mit einem herkömmlichen Wischmopp ist auf Grund der hohen Reibungskraft mit der zu reinigenden Oberfläche nicht möglich. Außerdem kann - in Abhängigkeit von der Beschaffenheit der zu reinigenden Oberfläche - das Bewegen des Wischkörpers sehr kraftaufwändig sein, da die hohen Reibungskräfte zwischen dem Stoff und der zu reinigenden Oberfläche zu überwinden sind. Hierdurch ist der Reinigungsvorgang anstrengend und ermüdend. Außerdem behindern die Friktions- und Adhäsionskräfte ein gleichmäßiges Gleiten auf einem glatten Boden, die Fläche neigt außerdem zum Kippen und Ruckeln.

Ein Reinigungsbezug der eingangs genannten Art ist insbesondere aus der DE 10 2009 029 049 A1 bekannt. Grundsätzlich ist der darin beschriebene Reinigungsbezug vom Aufbau und von der Bedienungsweise ähnlich zu dem Reinigungsbezug gemäß der vorliegenden Erfindung, so dass der Offenbarungsgehalt der DE 10 2009 029 049 A1 vollumfänglich hier einbezogen wird, insbesondere da die dort beschriebenen Sachverhalte auch auf die vorliegende Erfindung angewendet werden können. Insbesondere wenn die Stofflagen eines solchen Reinigungsbezugs aus Evolon bestehen, ist eine Reibung des Reinigungsbezugs auf der Oberfläche des zu reinigenden Bodens noch sehr hoch, so dass eine Reinigung einer großen Fläche für einen Bediener kraftaufwendig und anstrengend ist.

Der vorliegenden Erfindung liegt daher die Aufgabe zugrunde, einen Reinigungsbezug, eine Reinigungsvorrichtung und ein Verfahren der eingangs genannten Art anzugeben und weiterzubilden, mit welchem einerseits eine Reinigung hoher Güte erzielbar ist und mit welcher andererseits der Reinigungsvorgang für einen Bediener weniger anstrengend gestaltet werden kann.

Der erfindungsgemäße Reinigungsbezug der eingangs genannten Art löst die voranstehende Aufgabe durch die Merkmale des Patentanspruchs 1. Danach ist ein solcher Reinigungsbezug dadurch gekennzeichnet, dass die Streifen schleifenförmig ausgebildet sind und jeweils eine Schleife bilden und hierdurch pro Streifen zumindest teilweise eine zweilagige Anordnung gebildet ist. Unter einer Schleife ist in diesem Zusammenhang insbesondere eine Schlaufe oder eine Schlinge zu verstehen. Eine Schleife kann aus einem Streifen gebildet werden, der z.B. derart gefaltet beziehungsweise umgeschlagen wird, dass seine längsseitigen Enden sich überlappen, wobei dieselbe Oberfläche des Streifens einander zugewandt sein können. Eine Anordnung vergleichbar eines Möbius-Bands wäre ebenfalls möglich. Insbesondere durch die Schleifenbildung der Streifen kann der Kontakt des Reinigungsbezugs mit der zu reinigenden Oberfläche verringert werden, ohne die wirksame Wischfläche wesentlich zu verringern. Hierdurch kann in besonders vorteilhafter Weise die Friktion zwischen Reinigungsbezug und der zu reinigenden Oberfläche verringert und somit die Gleitfähigkeit des Reinigungsbezugs auf der Oberfläche erhöht werden.

Gemäß einer bevorzugten Ausführungsform sind die Streifen und/oder die Schleifen derart angeordnet, dass sie sich lateral in mindesten einer Richtung überlappen und einen Überlappungsbereich bilden. Alternativ oder zusätzlich sind die Streifen und/oder die Schleifen derart angeordnet, dass sie sich lateral in mindesten einer Richtung nicht überlappen und einen Überstehbereich bilden. In diesem Zusammenhang bezieht sich die laterale Überlappung auf die Oberfläche des Reinigungsbezugs bzw. auf die zu reinigende Oberfläche. So könnte zum Beispiel eine erste Lage von Streifen und/oder Schleifen zu einer zweiten Lage von Streifen und/oder Schleifen ortsfest an dem Reinigungsbezug angeordnet sein, wobei die erste Lage und die zweite Lage - bezogen auf die zu reinigende Oberfläche und zum Beispiel in Längsrichtung der Streifen und/oder der Schleifen und/oder quer dazu - sich in einem Überlappungsbereich überlappen und dass die zweite Lage einen Überstehbereich aufweist, in welchem - ebenfalls bezogen auf die zu reinigenden Oberfläche - die zweite Lage nicht mit der ersten Lage überlappt. Bei der Reinigung ist der Überstehbereich der zweiten Lage von Streifen und/oder Schleifen mit der zu reinigenden Oberfläche in Kontakt bringbar. Die zweite Lage wird also im Allgemeinen in dem Überlappungsbereich mit der zu reinigenden Oberfläche nicht in Kontakt bringbar sein, da sie auf der der zu reinigenden Oberfläche abgewandten Seite der ersten Lage angeordnet ist. Unter einer ortsfesten Anordnung von einer Lage von Streifen und/oder Schleifen zu einer anderen Lage von Streifen und/oder Schleifen ist im Sinn der vorliegenden Erfindung insbesondere zu verstehen, dass bei der Reinigung mit dem Reinigungsbezug die eine Lage definiert bzw. im Wesentlichen unveränderlich gegenüber der anderen Lage angeordnet ist. Dies könnte durch eine entsprechende Befestigung der beiden Lagen von Streifen und/oder Schleifen aneinander erreicht werden.

Mit anderen Worten weist der Reinigungsbezug zwei oder mehr Lagen bzw. Schichten von Streifen und/oder Schleifen auf. Da die zwei Lagen lediglich teilweise relativ zueinander überlappend angeordnet sind, stehen also die erste Lage und der Überstehbereich der zweiten Lage mit der zu reinigenden Oberfläche während des Reinigungsvorgangs in Kontakt. In der Nähe des Übergangs zwischen einem Randbereich der ersten Lage und des Überstehbereichs der zweiten Lage gibt es jedoch - in Abhängigkeit der Stoffdicke der ersten Lage von Streifen und/oder Schleifen - einen Bereich, in welchem die zweite Lage nicht unmittelbar in Kontakt mit der zu reinigenden Oberfläche steht.

In einer ganz besonders bevorzugten Ausführungsform sind die Streifen und/oder die Schleifen entlang mindestens einer Richtung schuppenförmig angeordnet. So könnte beispielsweise eine erste Lage von nebeneinander angeordneten Streifen und/oder Schleifen im Wesentlichen deckungsgleich zu einer zweiten Lage von nebeneinander angeordneten Streifen und/oder Schleifen angeordnet sein, wobei die erste Lage von Streifen und/oder Schleifen bezüglich der Längsrichtung oder der Querrichtung - also entlang einer Richtung - versetzt angeordnet ist. Weiterhin könnte eine erste Lage von nebeneinander angeordneten Streifen und/oder Schleifen zusätzlich in einer Richtung senkrecht zur Längsrichtung (oder zur Querrichtung) zur zweiten Lage von nebeneinander angeordneten Streifen und/oder Schleifen - also entlang zwei Richtungen - versetzt angeordnet sein. Mit einer letztgenannten Anordnung der Schleifen wurden guten Reinigungsergebnisse erzielt.

Der Reinigungsbezug könnte eine Trägerschicht oder eine rahmenförmige Konstruktion aufweisen, wobei mindestens ein Befestigungsmittel und/oder ein Streifen und/oder eine Schleife mittels einer Naht oder mittels einer Ultraschallschweißnaht an der Trägerschicht angenäht ist. Im Konkreten könnte der Reinigungsbezug mit Hilfe der Trägerschicht an der Reinigungsvorrichtung befestigt werden und/oder als Zwischenstück zwischen Streifen bzw. Schleifen und der Reinigungsvorrichtung wirken. Die Trägerschicht könnte beispielsweise aus Stoff oder Kunststoff - oder aus einem Stoff- oder Kunststoffgewebe - ausgebildet sein und eine höhere Steifigkeit als die Streifen und/oder eine Schleifen aufweisen.

Ganz besonders bevorzugt könnten die Streifen und/oder die Schleifen vergleichbar einer Anordnung nach einem der Ansprüche 1 bis 10 der DE 10 2009 029 049.4 angeordnet sein. Hierbei kommt für die Schleifen eine vergleichbare Anordnung wie für die einzelnen Streifen gemäß einem der Ansprüche 1 bis 10 der DE 10 2009 029 049.4 in Frage, wobei eine Schleife durch einen zwei- oder mehrlagigen Streifen gebildet sein kann. Insoweit ist auch ein Reinigungsbezug mit einem Aufbau mit einem Hohlkörper gemäß der DE 10 2009 029 049.4 möglich.

In einer ganz besonders bevorzugten Ausführungsform weist mindestens ein Streifen bzw. eine Schleife einen Vliesstoff aus Polyester und Polyamid oder aus Polyethylenterephtalat (PET) und Polyamid auf bzw. sind aus einem solchen Stoff ausgebildet. Ein solcher Vliesstoff ist insbesondere unter der Bezeichnung Evolon (®) von der Firma Freudenberg Evolon KG, 69465 Weinheim, Deutschland beziehbar. Dieser Stoff weist feine Endlos-Filamente auf, welche einerseits stabil und strapazierfähig und andererseits weich und aufnahmefähig für Schmutz und vor allem für Feuchtigkeit sind. Dieser Stoff kann in Form von einer regelmäßigen Flächenware verwendet werden, beispielsweise in Form eines Tuchs, insbesondere mit einer Dicke von bis zu 5 mm. Brauchbare Ergebnisse für die hier vorliegende Anwendung konnten mit einer Tuchdicke von 0,5 mm bis 2,5 mm erzielt werden. Der Stoff hat eine mikrokapillare Struktur und kann bei vielschichtigem Aufbau eine hohe Feuchtigkeitsaufnahme aufweisen. Weiterhin kann dieser Stoff leicht gewaschen und schnell getrocknet werden und ist darüber hinaus langlebig. Dieser Stoff sowie weitere Varianten hiervon sind auch in der EP 0 814 188 A1 beschrieben, so dass die Stoffteile neben dem oben genannten Vliesstoff mit der Bezeichnung Evolon (®) auch einen anderen in der EP 0 814 188 A1 genannten Stoff oder Kombinationen hiervon aufweisen kann bzw. daraus bestehen kann. Auch könnten Lagen von Schleifen Endlos-Filamente aufweisen. Mindestens eine Lage von Schleifen könnte aus einem Stoff bestehen, welcher aus gewebten oder nicht gewebten Mikrofasern - insbesondere synthetisch - hergestellt ist. Der erfindungsgemäße Reinigungsbezug mit einem solchen Stoff ist in trockenem Zustand hervorragend für die Feinstaubaufnahme geeignet und bindet auch durch seinen konstruktiven Aufbau Fusseln bzw. Haare. Zudem kann der Reinigungsbezug nach der Trockenreinigung (Fussel- und Feinstaubaufnahme) durch Abwischen mit der Hand leicht wieder von groben Teilen nach der Anwendung befreit werden. Ein lästiges Auszupfen von Haaren und anderen Grobteilen entfällt, weil das Material keine dauerhafte Bindung mit dem Schmutz eingeht. Bei der Feucht- oder Nassreinigung kann der Reinigungsbezug ganz einfach unter fließendem Wasser gereinigt werden.

Besonders bevorzugt ist der Stoff flächig oder punktförmig und/oder bereichsförmig kalandriert. Der Stoff kann hierbei durch einen Kalander hindurchgeführt werden, wobei ein Kalander ein System aus mehreren aufeinander angeordneten beheizten und polierten Walzen aus Schalenhartguss oder Stahl ist. Kalander werden auch zum Prägen, Glätten, Verdichten und Satinieren von Papier und Textilien benutzt. Ein solcher Vorgang nennt sich Kalandrieren. Durch das Kalandrieren des Stoffs kann diesem eine erhöhte Steifigkeit zugeführt werden, was wegen der Schleifenbildung auf Grund der erhöhten Steifigkeit des Stoffs eine Art Federwirkung jeder einzelnen Schleife zu einer (stellenweisen) Verringerung der Berührung des Reinigungsbezugs mit der zu reinigenden Oberfläche führen kann. Hierdurch kann die Friktion und/oder die Adhäsion bei der Bewegung mit der Reinigungsvorrichtung relativ zu der zu reinigenden Oberflächen verringert werden. Nun könnte der Stoff flächig oder bereichsförmig kalandriert werden, was unter Umständen zu einer hohen Steifigkeit des Stoffs führt, jedoch die Aufnahmefähigkeit des Stoffs von Schmutz verringern kann. Daher ist bevorzugt vorgesehen, den Stoff punktförmig derart zu kalandrieren, dass die Größe des punktförmig kalandrieren Bereichs sowie deren Abstände zu einer ausreichend hohen Steifigkeit des Stoffs und zu einer möglichst hohen Aufnahmefähigkeit des Stoffs von Schmutz führt. Dies ist insbesondere für einen Stoff bestehend aus Evolon vorgesehen. Evolon kann bei einer Temperatur von circa 200 Grad kalandriert werden. In einem Ausführungsbeispiel haben die Kalandrierpunkte einen Durchmesser von circa 0,55 mm. Die Kalandrierpunkte sind so gesetzt, dass sie die flächige Bodenberührung nicht maßgeblich beeinträchtigen - andererseits sollen sie eine zusätzliche Steifheit und auch höhere Langlebigkeit durch weniger Abrieb gewährleisten. Die Abstände der Kalandrierpunkte voneinander sind in einer Richtung circa 0,65 mm, so dass auf einen Quadratzentimeter (10 mm x 10 mm) circa 60 bis 90 Kalandrierpunkte kommen. Das ergibt auf die relativ kleine Fläche einer Schleife von 10 x 10 mm eine Anzahl von 83 bis 86 Kalandrierpunkten. Bei einer Oberflächenberührung von 20 x 20 mm ergibt das eine Anzahl von circa 344 Stegen und Vertiefungen. Bei 260 Oberflächenberührungspunkten (= Menge der Schlaufenenden auf dem gesamten Reinigungsbezug) ä 10 mm x 20 mm sind das über 45.000 Stege und Vertiefungen. Dazu kommt noch der durchgehende "Mittelstreifen" (4 x 52 cm) der ebenfalls noch um die 16.000 Stege und Vertiefungen aufweist. Diese Tatsache bringt den Reinigungsbezug auf der zu reinigenden Oberflächen zum "Schweben", so dass bei einer gesamt gezählten Bodenberührungsfläche von circa 52 cm x circa 12 cm ein optimales und einzigartiges Reinigungsergebnis erreicht werden kann. Es ist als ob man mit einem sehr großen Tuch in der Hand über den Boden wischt.

In einer ganz besonders bevorzugten Ausführungsform ist mindestens ein Streifen oder mindestens eine Schleife frei beweglich bzw. lose relativ zu einem anderen Streifen bzw. Schleife oder zu einem anderen Stoffteil angeordnet. Dies könnte vorzugsweise an einer Längsseite des Reinigungsbezugs vorgesehen sein. Wenn die Streifen bzw. Schleifen derart angeordnet sind, dass sie einen Überstehbereich bilden, kann auf Grund der Ausbildung des Reinigungsbezugs und der Gewichtskraft der Reinigungsvorrichtung ein geeigneter Kontakt mit der zu reinigenden Oberfläche hergestellt werden und es kann somit Schmutz aufgenommen bzw. gebunden werden.

Bevorzugt ist mindestens eine Lage von Streifen bzw. Schleifen derart bemessen, dass sie sich im Wesentlichen vollständig über eine Längsseite eines Wischkörpers der Reinigungsvorrichtung oder vollständig über eine Längsseite eines rechteckförmigen Reinigungsbezugs erstreckt.

Benachbart angeordnete Schleifen könnten aus einer Stofflage dadurch gebildet werden, dass die Stofflage umgeschlagen wird, so dass mindestens ein Überlappungsbereich gebildet ist, wobei die Stofflage im Querschnitt dann eine Schleife bildet. Durch Schneiden oder Stanzen des Stoffs zumindest in einen Teil des Überlappungsbereichs ist eine Reihe von nebeneinander angeordneten streifenförmigen Schleifen erzeugbar, wobei das Schneiden oder Stanzen des Stoffs bevorzugt derart erfolgt, dass ein oder zwei zusammenhängende Bereiche der Stofflage verbleiben. Die Schleifen können an einer Trägerschicht befestigt werden, vorzugsweise mit dem zusammenhängenden Bereich der Stofflage. Alternativ hierzu ist es auch denkbar, eine Reihe von nebeneinander angeordneten streifenförmigen Schleifen derart zu erzeugen, dass ein im Wesentlichen rechteckförmiges Stoffteil aus einer Stoffbahn gestanzt oder geschnitten wird. Bei dem Stanzvorgang oder nach dem Schneidevorgang können in einem mittleren Teil des rechteckförmigen Stoffteils mehrere die parallele Schlitze jeweils in einem vorgebbaren Abstand zueinander gestanzt werden, wobei jedoch keiner der Schlitze bis zum äußeren Rand des rechteckförmigen Stoffteils reicht. Wenn dann das rechteckförmige Stoffteil mittig entlang einer Richtung quer zu den parallelen Schlitzen umgeschlagen bzw. gefaltet wird, ist eine Reihe von nebeneinander angeordneten streifenförmigen Schleifen erzeugbar.

Die einzelnen Streifen und/oder Schleifen können eine vorgebbare Breite aufweisen, welche in einem Bereich zwischen 1 cm und 5 cm liegen könnte und vorzugsweise eine Breite von 1 cm bis 2 cm aufweist. Auch können unterschiedliche Streifen- und Schleifenbreiten auf einem Reinigungsbezug eingesetzt werden. Aufgrund der vorgesehenen Streifen und/oder Schleifen wird sowohl eine sehr gute Feinschmutzreinigung bei einer trockenen Anwendung des Reinigungsbezugs als auch eine sehr gute Reinigung bei feuchtem Reinigungsbezug gewährleistet. Durch die gebildeten Streifen und/oder Schleifen kann die Reibungskraft zwischen den Stoffteilen und der zu reinigenden Oberfläche verringert werden. Die einzelnen Streifen und/oder Schleifen können jeweils versetzt zueinander (vergleichbar zu einer Schuppenanordnung) oder im Wesentlichen überlappend angeordnet sein. Überstehbereiche von Schleifen, welche in der Regel auch frei bewegliche Teile einer Schleife sind, kommen auf Grund der Gewichtskraft des Reinigungsbezugs und/oder auf Grund der Gewichtskraft eines Wischkörpers, an welchem der Reinigungsbezug befestigt ist, mit der zu reinigenden Oberfläche in Kontakt bzw. zur Auflage. Dasselbe gilt für die lose relativ zu einer anderen Lage von Schleifen oder relativ zu einer Seite des Reinigungsbezugs angeordneten Streifen bzw. Schleifen. Hierdurch wird die Reinigungswirkung und insbesondere die Schmutzaufnahme des Reinigungsbezugs weiter erhöht.

Nun könnte der Reinigungsbezug ein Befestigungsmittel aufweisen, mit welchem der Reinigungsbezug an der Reinigungsvorrichtung befestigbar ist. Alternativ oder zusätzlich könnte das Befestigungsmittel eine Befestigungslage aus Stoff (Lasche) aufweisen. An der Befestigungslage aus Stoff könnte mindestens ein Klettverschluss oder ein Teil eines Druckknopfpaars angeordnet sein. Die Befestigungslage aus Stoff könnte um einen Wischkörper der Reinigungsvorrichtung umschlagbar sein und mit dem mindestens einen Klettverschluss oder dem Druckknopfpaar daran fixierbar sein. Die Befestigungslage aus Stoff könnte in Form mindestens einer Lasche ausgebildet sein. Man kann also beispielsweise einen vorhandenen herkömmlichen Wischmopp einfach auf den ausgebreiteten Reinigungsbezug stellen, schlägt die auf beiden Seiten angeordneten Laschen übereinander, drückt leicht die aufgenähte Klettverschlussflächen zusammen und der Reinigungsbezug ist an dem herkömmlichen Wischmopp fixiert. Er kann sich, wenn richtig angebracht, nicht mehr verschieben und somit problemlos für die gründliche Bodenreinigung eingesetzt werden.

Gemäß einer ganz besonders bevorzugten Ausführungsform weisen die mit der zu reinigenden Oberfläche in Kontakt bringbaren Schleifen und/oder Streifen bzw. deren Überstehbereiche die Form eines Rechtecks oder eines Quadrates auf. Das Rechteck könnte die Seitenlängen von ungefähr 50 cm x 17 cm aufweisen, die quadratische Form könnte eine Form von ca. 20 x 20 cm bzw. 24 x 24 cm aufweisen. Ein so ausgebildeter Reinigungsbezug kann in entsprechender Ausführung auch an einen herkömmlichen Wischmopp befestigt werden und zwar insbesondere über den üblicherweise rechteckigförmig ausgebildeten - herkömmlichen - Stoffbezug des herkömmlichen Wischmopps. Dementsprechend sind die Schleifen des erfindungsgemäßen Reinigungsbezugs zwischen der zu reinigenden Oberfläche und dem Stoffbezug des herkömmlichen Wischmopps angeordnet. Auf Grund der elastischen bzw. deformierbaren Eigenschaften des Stoffbezugs des herkömmlichen Wischmopps kann sich zwischen den Schleifen des erfindungsgemäßen Reinigungsbezugs und der zu reinigenden Oberfläche in besonders vorteilhafter Weise ein Auflagedruck der Schleifen des Reinigungsbezugs ergeben, der ein Reinigungsergebnis hoher Güte ermöglicht. Grundsätzlich könnten die mit der zu reinigenden Oberfläche in Kontakt bringbaren Schleifen bzw. deren Überstehbereiche auch die Form eines Kreises, einer Ellipse oder eines Dreiecks aufweisen.

Die vorliegende Erfindung betrifft also einen Reinigungsbezug, welcher zum größten Teil aus Stoff bzw. Textil bestehen kann. Der Stoff bzw. das Textil ist jedoch in einer besonderen Weise zu einem mehrlagigen - durch die Scheifenbildung der Streifen - Reinigungsbezug zusammengesetzt. Es können alle in Frage kommenden Fasern für den Reinigungsbezug zum Einsatz kommen, insbesondere alle Nonwoven Stoffe und sonstige Textilien - auch aus gewebter Mikrofaser. Insbesondere kann der erfindungsgemäße Reinigungsbezug mit einer aus der DE 10 2006 027 284 A1 bekannten Vorrichtung eingesetzt und insbesondere an dem Wischkörper dieser Vorrichtung Verwendung finden.

Nun könnte grundsätzlich ein Streifen mindestens zwei Lagen eines Stoffs aufweisen. Dies könnte insbesondere dann zweckmäßig sein, wenn eine Lage des Stoffs eine zu geringe Dicke aufweist, um als einzelne Lage eingesetzt zu werden.

Bezüglich einer Reinigungsvorrichtung wird die eingangs genannte Aufgabe durch die Merkmale des Patentanspruchs 14 gelöst. Demgemäß weist eine erfindungsgemäße Reinigungsvorrichtung einen Reinigungsbezug nach einem der Ansprüche 1 bis 13 auf. Der Reinigungsbezug kann hierbei reversibel oder-weniger bevorzugt - dauerhaft an der Reinigungsvorrichtung befestigt sein. Dementsprechend können ein Wischkörper der Reinigungsvorrichtung sowie der Reinigungsbezug derart ausgebildet sein, dass die Reinigung einer bestimmten Art von zu reinigender Oberfläche eine hohe Güte aufweist. So könnte beispielsweise die Reinigungsvorrichtung zur Reinigung von Fliesenböden oder Parkett- bzw. Laminatböden - sowie PVC-Böden und allen anderen glatten Böden optimiert sein. Da die erfindungsgemäße Reinigungsvorrichtung einen Reinigungsbezug nach einem der Ansprüche 1 bis 13 aufweist, wird zur Vermeidung von Wiederholungen auf den vorangegangenen Teil der Beschreibung verwiesen.

In verfahrensmäßiger Hinsicht wird die eingangs genannte Aufgabe durch die Merkmale des Anspruchs 15 gelöst. Demgemäß dient das erfindungsgemäße Verfahren zum Reinigen und/oder Trocknen einer zu reinigenden Oberfläche. Das erfindungsgemäße Verfahren wird mit einer Reinigungsvorrichtung nach Anspruch 14 durchgeführt und ist durch die folgenden Verfahrensschritte gekennzeichnet:
a) Durchführen einer Vorreinigung der zu reinigenden Oberfläche mit der insbesondere in Form eines Wischmopps ausgebildeten Reinigungsvorrichtung zunächst ohne einen Reinigungsbezug nach einem der Ansprüche 1 bis 13,
b) Anbringen eines nach einem der Ansprüche 1 bis 13 ausgebildeten - vorzugsweise angefeuchteten - Reinigungsbezugs an der Reinigungsvorrichtung,
c) Fixieren des Reinigungsbezugs an der Reinigungsvorrichtung mit Hilfe mindestens einen Befestigungsmittels,
d) Durchführen einer Endreinigung der zu reinigenden Oberfläche mit der Reinigungsvorrichtung, an welcher der Reinigungsbezug angebracht ist.

Das erfindungsgemäße Verfahren kann sich also aus einer Vorreinigung mit einem herkömmlichen Wischmopp und einer Nach- bzw. Endreinigung zusammensetzen, wobei erst bei der Endreinigung der erfindungsgemäße Reinigungsbezug zum Einsatz kommt. Insoweit kann ein nach einem der Ansprüche 1 bis 13 ausgebildeter Reinigungsbezug in ganz besonders vorteilhafter Weise mit einer herkömmlichen Reinigungsvorrichtung und insbesondere mit einem herkömmlichen Wischmopp kombiniert werden und so die zu reinigende Oberfläche mit einer verbesserten Güte reinigen.

Da für einen Fachmann sich in Kenntnis der Ausgestaltung und der Funktionsweise des erfindungsgemäßen Reinigungsbezugs nach einem der Ansprüche 1 bis 13 bzw. der erfindungsgemäßen Reinigungsvorrichtung nach Anspruch 14 ein Verfahren zum Reinigen und/oder Trocknen einer zu reinigenden Oberfläche zumindest weitgehend erschließt, wird zur Vermeindung von Wiederholungen einerseits auf den vorangegangenen Teil der Beschreibung und andererseits auf den Offenbarungsgehalt der DE 10 2009 029 049 A1 und insbesondere auf die dortigen Ausführungen bezüglich des Verfahrens zum Reinigen und/oder Trocknen verwiesen.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im allgemeinen bevorzugte Ausgestaltungen und Weiterbildungen der Lehre erläutert.
In der Zeichnung zeigen jeweils in einer schematische Darstellung
- Fig. 1: in einer Aufsicht ein Ausführungsbeispiel eines erfindungsgemäßen Reinigungsbezugs, wobei die in Fig. 1 gezeigten Stoffteile während der Reinigung der zu reinigenden Oberfläche zugewandt sind,
- Fig. 2 bis 4: jeweils in einer seitlichen Schnittdarstellung entlang der Linie 2-2 ein zur Fig. 1 vergleichbares Ausführungsbeispiel,
- Fig. 5: in einer Vergrößerung eine Ansicht eines Teils des Stoffs, aus welchem die Streifen bzw. Schleifen gebildet sein können,
- Fig. 6: in einer Vergrößerung eine Ansicht eines Teils des Stoffs vergleichbar zur Fig. 5, aus welchem die Streifen bzw. Schleifen gebildet sein können, wobei in dieser Stoff bereichsweise bzw. punktförmig kalandiert ist,
- Fig. 7: in einer Vergrößerung eine Schnittansicht des in Fig. 6 gezeigten Stoffs,
- Fig. 8: in einer Vergrößerung eine Ansicht eines Teils eines Stoffs, bei welchem eine Vielzahl von Bereiche bzw. Punkte kalandiert sind und
- Fig. 9: in einer Aufsicht ein zusammenhängendes Stoffteil, welches in einer Rechteckform gestanzt wurde, um benachbart angeordnete Schleifen zu bilden.

In den Figuren sind oder ähnliche Bauteile mit denselben Bezugszeichen gekennzeichnet.

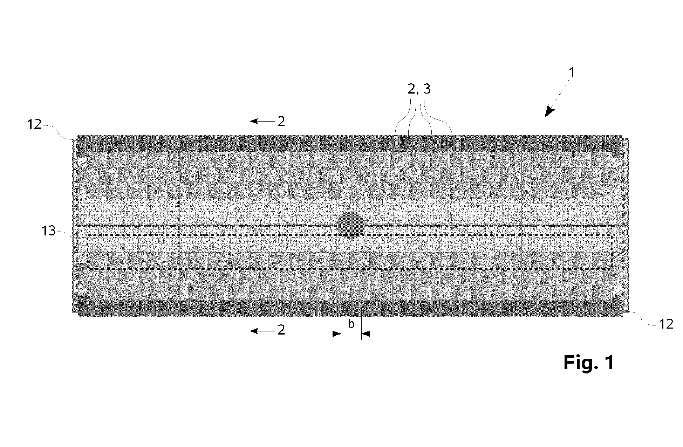

Fig. 1 zeigt in einer Aufsicht ein Ausführungsbeispiel eines erfindungsgemäßen Reinigungsbezugs 1. Der in Fig. 1 gezeigte Reinigungsbezug 1 ist während der Reinigung der zu reinigenden Oberfläche (in Fig. 1 nicht gezeigt) zugewandt und bei dem Reinigungsvorgang mit der zu reinigenden Oberfläche in Kontakt bringbar. Der Reinigungsbezug 1 weist mehrere nebeneinander und sich teilweise überlappen angeordnete Streifen 2 eines Stoffs auf. Die Streifen 2 des Stoffs haben eine in jeweils vorgegebene Breite b von circa 2 cm.

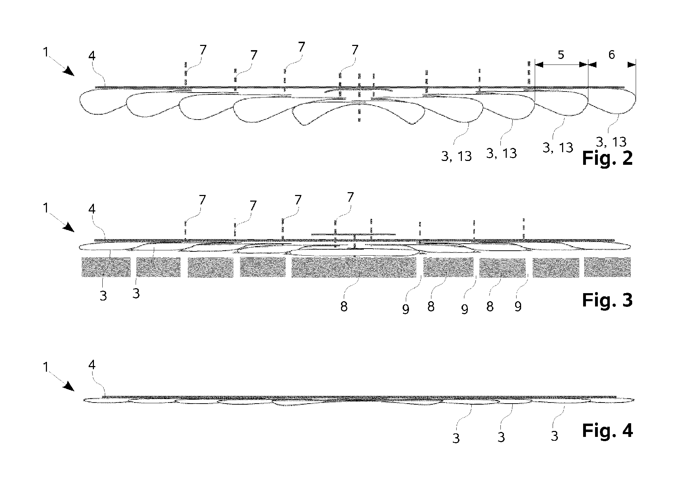

Erfindungsgemäß sind die Streifen 2 schleifenförmig ausgebildet und bilden jeweils eine Schleife 3, was in den Fig. 2 bis 4 gezeigt ist. Die Fig. 2 bis 4 zeigen jeweils in einer seitlichen Schnittdarstellung entlang der in Fig. 1 gezeigten Linie 2-2 ein zur Fig. 1 vergleichbares Ausführungsbeispiel eines Reinigungsbezugs 1 mit den Schleifen 3. So ist beispielsweise die mittig angeordnete Schleife 3 derart gefaltet beziehungsweise umgeschlagen, dass die Innenseite des einen Endbereichs der Schleife 3 mit der Außenseite des anderen Endbereichs der Schleife 3 etwas überlappt. In dem Überlappungsbereich liegen daher drei Lagen des Stoffs vor, in dem anderen Bereich der Schleife 3 liegen zwei Lagen des Stoffs vor. Die anderen Schleifen 3 sind hingegen derart gefaltet beziehungsweise umgeschlagen, dass die Endbereiche jeweils mit ihrer Innenseite zur Überlagerung kommen. Daher sind diese Schleifen 3 durch zwei Lagen des Stoffs gebildet. Obwohl dies in den Fig. nicht gezeigt ist, könnte ein Streifen 2 auch jeweils durch mindestens zwei Lagen eines Stoffs gebildet sein. Die mit der zu reinigenden Oberfläche in Kontakt bringbaren Schleifen 3 bzw. deren Überstehbereiche 6 weisen die Form eines Rechtecks auf, welches Seitenlängen von ungefähr 50 cm x 12 cm aufweist.

Die in Fig. 2 rechts gezeigte Schleife 3 ist derart zu der links benachbarten Schleife 3 angeordnet, dass die beiden Schleifen 3 sich lateral in einer Richtung überlappen und einen Überlappungsbereich 5 bilden und das die beiden Schleifen sich lateral in einer Richtung nicht überlappen und einen Überstehbereich 6 bilden. Fig. 1 ist entnehmbar, dass die Schleifen 3 schuppenförmig angeordnet sind, und zwar sowohl bezüglich der Längsrichtung als auch bezüglich der Querrichtung des im rechteckig ausgebildeten Reinigungsbezugs 1. Dementsprechend sind die Schleifen 3 vergleichbar angeordnet wie die Streifen bzw. Stofflagen gemäß einem der Ansprüche 1 bis 10 der DE 10 2009 029 049.4.

Fig. 2 zeigt den Reinigungsbezug 1 in einer Explosionsdarstellung, in welcher insbesondere die Schleifen 3 jeweils in einem gefalteten Zustand gezeigt sind, in welchem sie noch nicht an der Trägerschicht 4 befestigt sind. Insoweit befinden sich die Schleifen 3 in einem ausgedehnten bzw. aufgeweiteten Zustand. Mit den senkrecht zur Trägerschicht 4 gestrichelt angedeuteten Linien 7 sind Positionen der Nähte eingezeichnet, mit welchen die jeweiligen Schleifen 3 an der Trägerschicht 4 befestigt werden. Die Schleifen 3 sind mit ihren der Naht abgewandten Seite frei beweglich relativ zu einer anderen benachbarten Schleife 3 bzw. relativ zum Reinigungsbezug 1 angeordnet, insbesondere relativ zu einer Längsseite des Reinigungsbezugs 1. Dies gilt insbesondere für die linken und rechten Schleifen 3 in Fig. 2. Die Trägerschicht 4 besteht in diesen Ausführungsbeispiel aus dem gleichen Stoff, aus welchem auch die Schleifen 3 gebildet sind.

In Fig. 3 ist der Reinigungsbezug 1 gemäß Fig. 2 zur deutlichen Darstellung in dem mittige im Bereich zwar noch in einer Explosionsdarstellung gezeigt, in den äußeren Bereichen des Reinigungsbezugs 1 sind die Schleifen 3 jedoch im an der Trägerschicht 4 fixierten Zustand gezeigt. Unterhalb des Reinigungsbezugs 1 gemäß Fig. 3 sind graue Bereiche 8 angedeutet, in welchen die Schleifen 3 in Kontakt mit der zu reinigenden Oberfläche (in den Fig. nicht gezeigt) gebracht werden kann. Dementsprechend gibt es zwischen den Bereichen 8 Bereiche 9, in welchen kein oder kaum Kontakt zwischen dem Reinigungsbezug 1 bzw. den Schleifen 3 und der zu reinigenden Oberfläche besteht. In Fig. 4 ist ein Ausführungsbeispiel eines Reinigungsbezugs 1 in einem Zustand gezeigt, in welchem eine Oberfläche gereinigt werden kann. Dementsprechend sind die Schleifen 3 in einem flachen bzw. komprimierten Zustand gezeigt.

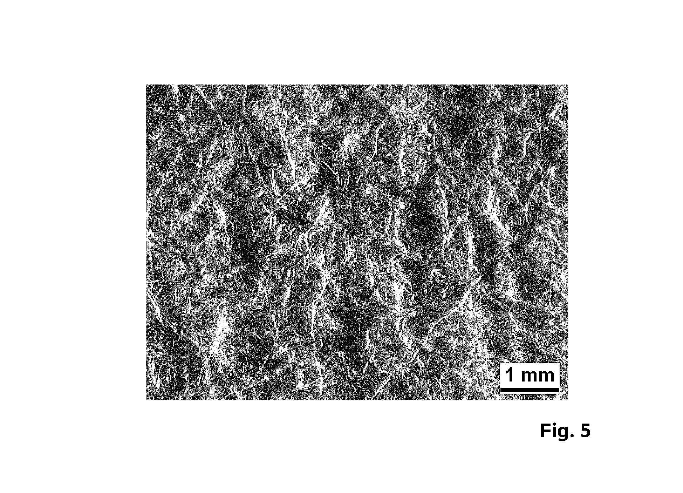

Ganz besonders bevorzugt sind die Streifen bzw. Schleifen aus einem Stoff, nämlich einem Vliesstoff aus Polyester und Polyamid oder aus Polyethylenterephtalat (PET) und Polyamid, gebildet. Ein solcher Stoff ist unter der Bezeichnung Evolon (®) von der Firma Freudenberg Evolon KG, 69465 Weinheim, Deutschland beziehbar. Die chemische Zusammensetzung es Stoffes ist in der EP 0 814 188 A1 beschrieben. Fig. 5 zeigt in einer Vergrößerung eine Ansicht eines Teils des Stoffs, aus welchem die Streifen bzw. Schleifen gebildet sind. Hierbei ist erkennbar, dass dieser Stoff aus einzelnen Fasern gebildet ist und dementsprechend eine hohe wirksame Oberfläche und damit verbunden eine hohe Feuchtigkeitsaufnahme ermöglicht.

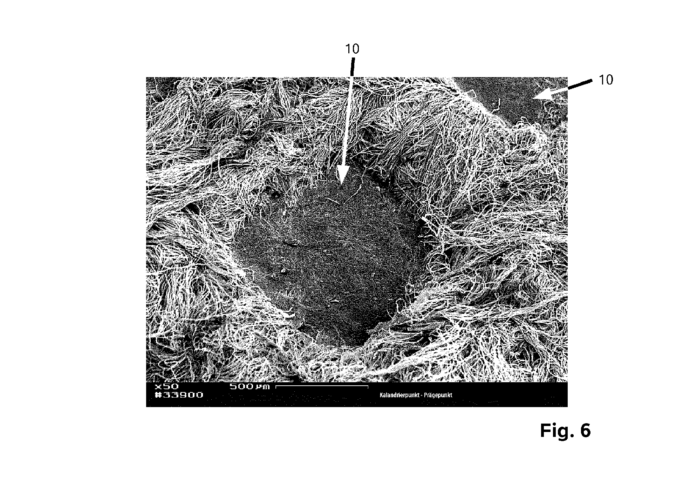

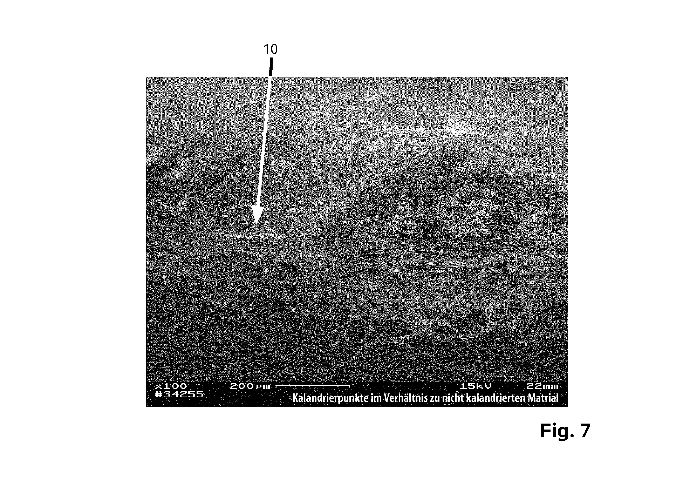

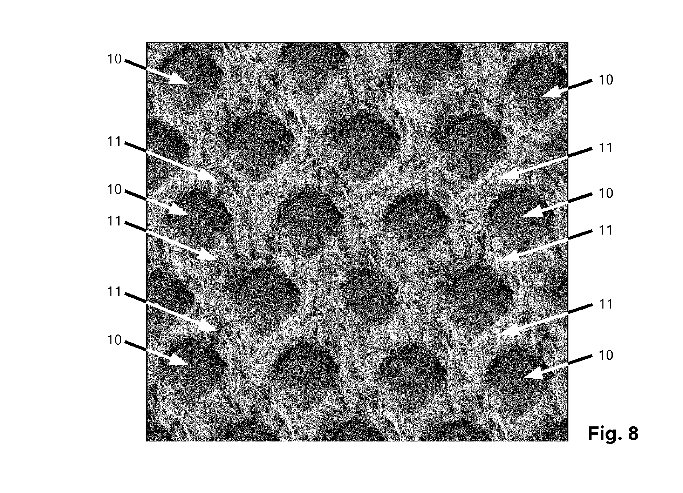

In Fig. 6 ist gezeigt, dass der Stoff gemäß Fig. 5 punktförmig bzw. bereichsförmig kalandriert ist. Eine solche Stelle ist mit dem Bezugszeichen 10 gekennzeichnet. Es handelt sich hierbei um eine elektronenmikroskopische Aufnahme eines Teils des Stoffs, wobei ein solcher Kalandrierpunkt eine Diagonale von circa 1 mm aufweist. In Fig. 7 ist eine elektronenmikroskopische Aufnahme eines anderen Teils eines Stoffs in einer Querschnittsdarstellung gezeigt. Hier hat der Kalandrierpunkt eine Ausdehnung von circa 0,4 mm. Hier ist deutlich erkennbar, wie die Faserstruktur in dem nicht kalandrierten Bereich sich von der Struktur der Fasern in dem kalandrierten Bereich unterscheidet. In dem kalandrierten Bereich sind die Fasern verdichtet bzw. miteinander verbunden oder verschweißt. In dem nicht kalandrierten Bereich hingegen liegen die Fasern vereinzelt und ungeordnet vor. Fig. 8 zeigt einen vergrößerten Ausschnitt des Stoffs mit einer Vielzahl von Kalandrierpunkten in einer symmetrischen Anordnung. Zwischen den kalandrierten Bereichen 10 sind so genannte Stege 11 angeordnet, bei welchen die Fasern des Stoffs vereinzelt und ungeordnet angeordnet sind. Mit den Stegen 11 erfolgt der Kontakt mit der zu reinigenden Oberfläche.

Der Reinigungsbezug 1 umfasst eine Trägerschicht 4. Jeweils eine Schleife 3 ist mittels einer Naht, insbesondere mittels einer Ultraschallschweißnaht, an der Trägerschicht 4 angenäht. Die Trägerschicht 4 und/oder der Reinigungsbezug 1 kann in vergleichbarer Weise an einem Wischkörperhaar einer Reinigungsvorrichtung befestigt werden, wie dies beispielsweise in der DE 10 2009 029 049 A1 offenbart ist. Alternativ hierzu kann der Reinigungsbezug 1 mit Laschen an einem Wischkörper einer Reinigungsvorrichtung befestigt werden, welche auf der Seite des Reinigungsbezugs 1 angeordnet sind, welche den Schleifen abgewandt ist und welche benachbart zu den kurzen Seiten eines rechteckigförmigen Reinigungsbezugs 1 angeordnet sind. Lediglich schematisch sind solche Laschen in Fig. 1 mit Rechtecken angedeutet und mit dem Bezugszeichen 12 gekennzeichnet.

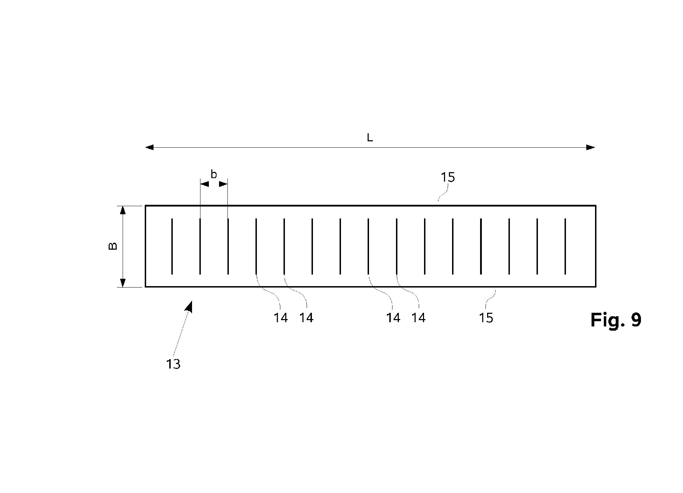

In Fig. 9 ist in einer Aufsicht ein zusammenhängendes Stoffteil 13 gezeigt, welches in einer Rechteckform gestanzt wurde. Um benachbart angeordnete Schleifen zu bilden, sind bei dem Stanzvorgang des Stoffteils 13 auch Schlitze 14 in das Stoffteil 13 gestanzt worden, welche sich jeweils nicht über die gesamte Breite B des Stoffteils 13 erstrecken und daher innerhalb des Stoffteils 13 angeordnet sind. Nach dem Stanzvorgang des Stoffteils 13 wird das Stoffteil 13 entlang der Längsseite derart gefaltet, dass die beiden gegenüberliegenden Längsseiten 15 des Stoffteils 13 sich überlappen. Hierdurch werden zwischen den Schlitzen 14 jeweils Schleifen der Breite b gebildet. Ein so gefaltetes Stoffteil 13 kann nun an eine Trägerschicht des Reinigungsbezugs der Länge L von beispielsweise 52 cm und einer Breite von 13 cm genäht werden, wie dies in Fig. 2 beispielsweise angedeutet ist. Insgesamt können circa 8 bis 15 solch gefalteter Stoffteile 13 an einer Trägerschicht eines Reinigungsbezugs befestigt werden, wobei die jeweils gefalteten Stoffteile 13 vorgebbare Maße und eine vorgebbare Position an der Trägerschicht aufweist. Hierdurch wird ein Schuppenmuster von Schleifen gebildet, mit welchem eine hohe Gleitfähigkeit des Reinigungsbezugs gewährleistet ist.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Reinigungsbezug für eine insbesondere in Form eines Wischmopps ausgebildete Reinigungsvorrichtung mit welcher eine Oberfläche reinigbar ist, wobei der Reinigungsbezug (1) mehrere nebeneinander und sich teilweise überlappend angeordnete Streifen eines Stoffes jeweils einer vorgebbaren Breite aufweist, wobei ein Streifen flächenförmig ausgebildet ist, wobei bei der Reinigung die Streifen der zu reinigenden Oberfläche zugewandt und mit der Oberfläche in Kontakt bringbar sind, **dadurch gekennzeichnet, dass** die Streifen schleifenförmig ausgebildet sind und jeweils eine Schleife (3) bilden und hierdurch pro Streifen zumindest teilweise eine zweilagige Anordnung gebildet ist.

2. Reinigungsbezug nach Anspruch 1, **dadurch gekennzeichnet, dass** die Streifen und/oder die Schleifen (3) derart angeordnet sind, dass sie sich lateral in mindesten einer Richtung überlappen und einen Überlappungsbereich (5) bilden.

3. Reinigungsbezug nach Anspruch 1 oder 2, **dadurch gekennzeichnet, dass** die Streifen und/oder die Schleifen (3) derart angeordnet sind, dass sie sich lateral in mindesten einer Richtung nicht überlappen und einen Überstehbereich (6) bilden.

4. Reinigungsbezug nach einem der Ansprüche 1 bis 3, **dadurch gekennzeichnet, dass** die Streifen und/oder die Schleifen (3) entlang mindestens einer Richtung schuppenförmig angeordnet sind.

5. Reinigungsbezug nach einem der Ansprüche 1 bis 4, **gekennzeichnet durch** eine Trägerschicht (4), dass ein Streifen und/oder eine Schleife (3) mittels einer Naht, insbesondere mittels einer Ultraschallschweißnaht, an der Trägerschicht (4) angenäht ist.

6. Reinigungsbezug nach einem der Ansprüche 1 bis 5, **dadurch gekennzeichnet, dass** die Streifen und/oder die Schleifen (3) vergleichbar einer Anordnung nach einem der Ansprüche 1 bis 10 der DE 10 2009 029 049.4 angeordnet sind.

7. Reinigungsbezug nach einem der Ansprüche 1 bis 6, **dadurch gekennzeichnet, dass** mindestens ein Streifen des Stoffs einen Vliesstoff aus Polyester und Polyamid oder aus Polyethylenterephtalat (PET) und Polyamid aufweist, welcher insbesondere unter der Bezeichnung Evolon (®) von der Firma Freudenberg Evolon KG, 69465 Weinheim, Deutschland beziehbar ist, und/oder dass mindestens ein Streifen des Stoffs einen Stoff aufweist, welcher in der EP 0 814 188 A1 beschrieben ist.

8. Reinigungsbezug nach einem der Ansprüche 1 bis 7, **dadurch gekennzeichnet, dass** der Stoff flächig oder punktförmig oder bereichsförmig kalandriert ist.

9. Reinigungsbezug nach einem der Ansprüche 1 bis 8, **dadurch gekennzeichnet, dass** mindestens ein Streifen oder mindestens eine Schleife (3) frei beweglich relativ zu einem anderen Streifen bzw. einer anderen Schleife (3) angeordnet ist, vorzugsweise relativ zu einer Längsseite des Reinigungsbezugs (1).

10. Reinigungsbezug nach einem der Ansprüche 1 bis 9, **dadurch gekennzeichnet, dass** benachbart angeordnete Schleifen (3) aus einer Stofflage dadurch bildbar sind, dass die Stofflage umgeschlagen wird, so dass mindestens ein Überlappungsbereich gebildet ist, dass durch Schneiden oder Stanzen des Stoffs zumindest in einen Teil des Überlappungsbereichs erzeugbar ist und dass die Schleife (3) an einer Trägerschicht (4) befestigbar ist.

11. Reinigungsbezug nach einem der Ansprüche 1 bis 10, **dadurch gekennzeichnet, dass** die einzelnen Streifen und/oder Schleifen (3) mindestens eine vorgebbare Breite aufweisen, welche in einem Bereich zwischen 1 cm und 5 cm liegen könnte und vorzugsweise eine Breite von ungefähr 2 cm aufweist

12. Reinigungsbezug nach einem der Ansprüche 1 bis 11, **gekennzeichnet durch** ein Befestigungsmittel, mit welchem der Reinigungsbezug (1) an der Reinigungsvorrichtung befestigbar ist, dass das Befestigungsmittel eine Befestigungslage aus Stoff aufweist und dass an der Befestigungslage aus Stoff mindestens ein Klettverschluss oder ein Teil eines Druckknopfpaars angeordnet ist, dass die Befestigungslage aus Stoff um einen Wischkörper der Reinigungsvorrichtung umschlagbar sein könnte und mit dem mindestens einen Klettverschluss oder dem Druckknopfpaar daran fixierbar sein könnte.

13. Reinigungsbezug nach einem der Ansprüche 1 bis 13, **dadurch gekennzeichnet, dass** die mit der zu reinigenden Oberfläche in Kontakt bringbaren Schleifen (3) und/oder Streifen bzw. deren Überstehbereiche (6) die Form eines Rechtecks aufweisen, welches Seitenlängen von ungefähr 50 cm x 12 cm aufweisen könnte und/oder dass der Stoff oder ein Streifen mindestens zwei Lagen eines zusammenhängenden Stoffs aufweist.

14. Reinigungsvorrichtung mit einem Reinigungsbezug (1) nach einem der Ansprüche 1 bis 13.

15. Verfahren zum Reinigen und/oder Trocknen einer zu reinigenden Oberfläche (9) mit einer Reinigungsvorrichtung (1) nach Anspruch 14, **gekennzeichnet durch** folgende Verfahrensschritte:
a) Durchführen einer Vorreinigung der zu reinigenden Oberfläche mit der insbesondere in Form eines Wischmopps ausgebildeten Reinigungsvorrichtung zunächst ohne einen Reinigungsbezug nach einem der Ansprüche 1 bis 13,
b) Anbringen eines nach einem der Ansprüche 1 bis 13 ausgebildeten - vorzugsweise angefeuchteten - Reinigungsbezugs (1) an der Reinigungsvorrichtung,
c) Fixieren des Reinigungsbezugs (1) an der Reinigungsvorrichtung mit Hilfe mindestens einen Befestigungsmittels,
d) Durchführen einer Endreinigung der zu reinigenden Oberfläche mit der Reinigungsvorrichtung, an welcher der Reinigungsbezug (1) angebracht ist.
